# EUROPEAN PATENT SPECIFICATION

(11) **EP 4 060 901 B1**
(45) Date of publication and mention of the grant of the patent: **30.07.2025**
(21) Application number: 22152189.1
(22) Date of filing: 19.01.2022
(51) Int. Cl.: H04B 1/3827, G01S 7/00, G01S 7/41, G01S 13/56, G01S 13/87, H04W 52/36, H01Q 1/24, H04W 84/12, G01S 13/00

(54) **RADIATION SAFETY MECHANISM BASED ON WI-FI SENSING**
STRAHLENSCHUTZMECHANISMUS BASIEREND AUF WI-FI-ABTASTUNG
MÉCANISME DE SÉCURITÉ DE RAYONNEMENT BASÉ SUR LA DÉTECTION WI-FI

(30) Priority: 19.03.2021 US 202117206169
(43) Date of publication of application: 21.09.2022
(73) Proprietor: INTEL Corporation, Santa Clara, CA 95054 (US)
(72) Inventor: KENNEY, Thomas, Portland 97229 (US); CARIOU, Laurent, 29290 Milizac (FR); DA SILVA, Claudio, Portland 97229 (US)
(74) Representative: Viering, Jentschura & Partner mbB Patent- und Rechtsanwälte

(56) References cited:
- US-A1- 2016 327 634
- US-A1- 2020 166 623
- US-A1- 2020 411 960
- US-A1- 2021 055 385

## Description

### TECHNICAL FIELD

Embodiments of the present disclosure generally relate to wireless communication, and in particular, to radiation safety mechanism based on Wireless Fidelity (Wi-Fi) sensing.

### BACKGROUND

Most wireless devices, such as mobile phones and tablets, use proximity sensors to perform human body detection and specific absorption rate (SAR) control. Such sensors are typically capacitive and discriminate between inanimate objects or human body by detecting the permittivity of surfaces in contact or close proximity with the device. A significant disadvantage of such SAR control method is that reduced RF energy exposure is not provided for humans in the coverage area, but not in contact or close proximity to the device - even those located just a few feet or meters away from it. US 2021/0055385 A1, US 2016/0327634 A1, and US 2020/0411960 A1 disclose prior art in this field.

### BRIEF DESCRIPTION OF THE DRAWINGS

Embodiments of the disclosure will be illustrated, by way of example and not limitation, in conjunction with the figures of the accompanying drawings in which like reference numerals refer to similar elements and wherein:
FIG. 1 is a network diagram illustrating an example network environment according to some embodiments of the disclosure.
FIG. 2 is a schematic diagram of an exemplary scenario in accordance with some embodiments of the disclosure.
FIG. 3 is a schematic diagram of SAR control in accordance with some embodiments of the disclosure.
FIG. 4 is a flowchart of a method for SAR control in accordance with some embodiments of the disclosure.
FIG. 5 is a flowchart of a method for SAR control in accordance with some embodiments of the disclosure.
FIG. 6 is a flowchart of a method for exchanging of device capability in SAR control in accordance with some embodiments of the disclosure.
FIG. 7 is a block diagram of a radio architecture 700A, 700B in accordance with some embodiments that may be implemented in any one of APs 104 and/or the user devices 102 of FIG. 1.
FIG. 8 illustrates WLAN FEM circuitry 704a in accordance with some embodiments.
FIG. 9 illustrates radio IC circuitry 706a in accordance with some embodiments.
FIG. 10 illustrates a functional block diagram of baseband processing circuitry 708a in accordance with some embodiments.
FIG. 11 is a functional diagram of an exemplary communication station in accordance with one or more example embodiments of the disclosure.
FIG. 12 is a block diagram of an example of a machine or system upon which any one or more of the techniques (e.g., methodologies) discussed herein may be performed.

### DETAILED DESCRIPTION

Various aspects of the illustrative embodiments will be described using terms commonly employed by those skilled in the art to convey the substance of the disclosure to others skilled in the art. However, it will be apparent to those skilled in the art that many alternate embodiments may be practiced using portions of the described aspects. For purposes of explanation, specific numbers, materials, and configurations are set forth in order to provide a thorough understanding of the illustrative embodiments. However, it will be apparent to those skilled in the art that alternate embodiments may be practiced without the specific details. In other instances, well known features may have been omitted or simplified in order to avoid obscuring the illustrative embodiments.

Further, various operations will be described as multiple discrete operations, in turn, in a manner that is most helpful in understanding the illustrative embodiments; however, the order of description should not be construed as to imply that these operations are necessarily order dependent. In particular, these operations need not be performed in the order of presentation.

The phrases "in an embodiment" "in one embodiment" and "in some embodiments" are used repeatedly herein. The phrase generally does not refer to the same embodiment; however, it may. The terms "comprising," "having," and "including" are synonymous, unless the context dictates otherwise. The phrases "A or B" and "A/B" mean "(A), (B), or (A and B)."

FIG. 1 is a network diagram illustrating an example network environment according to some embodiments of the disclosure. As shown in FIG.1, a wireless network 100 may include one or more user devices 102 and one or more access points (APs) 104, which may communicate in accordance with IEEE 802.11 communication standards. The user devices 102 may be mobile devices that are non-stationary (e.g., not having fixed locations) or may be stationary devices.

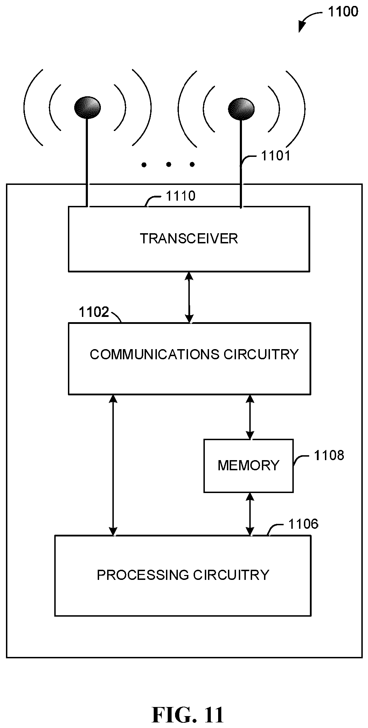

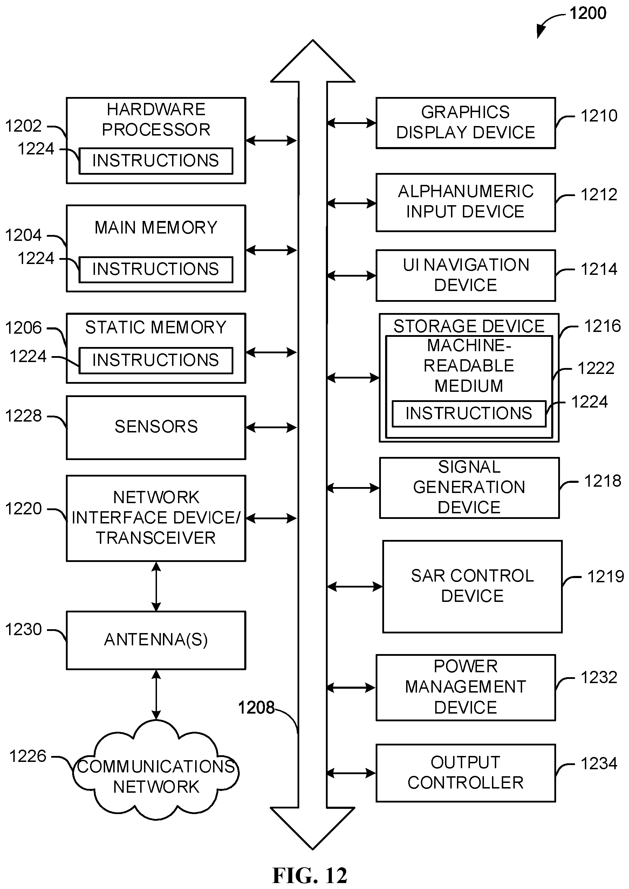

In some embodiments, the user devices 102 and APs 104 may include one or more function modules similar to those in the functional diagram of FIG. 11 and/or the example machine/system of FIG. 12.

The one or more user devices 102 and/or APs 104 may be operable by one or more users 110. It should be noted that any addressable unit may be a station (STA). A STA may take on multiple distinct characteristics, each of which shape its function. For example, a single addressable unit might simultaneously be a portable STA, a quality-of-service (QoS) STA, a dependent STA, and a hidden STA. The one or more user devices 102 and the one or more APs 104 may be STAs. The one or more user devices 102 and/or APs 104 may operate as a personal basic service set (PBSS) control point/access point (PCP/AP). The user devices 102 (e.g., 1024, 1026, or 1028) and/or APs 104 may include any suitable processor-driven device including, but not limited to, a mobile device or a non-mobile, e.g., a static device. For example, the user devices 102 and/or APs 104 may include, a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook^{™} computer, a notebook computer, a tablet computer, a server computer, a handheld computer, a handheld device, an internet of things (IoT) device, a sensor device, a personal digital assistant (PDA) device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a personal communications service (PCS) device, a PDA device which incorporates a wireless communication device, a mobile or portable global positioning system (GPS) device, a digital video broadcasting (DVB) device, a relatively small computing device, a non-desktop computer, a "carry small live large" (CSLL) device, an ultra mobile device (UMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any object (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user devices 102 and/or APs 104 may also include mesh stations in, for example, a mesh network, in accordance with one or more IEEE 802.11 standards and/or 3GPP standards.

Any of the user devices 102 (e.g., user devices 1024, 1026, 1028) and APs 104 may be configured to communicate with each other via one or more communications networks 130 and/or 135 wirelessly or wired. The user devices 102 may also communicate peer-to-peer or directly with each other with or without APs 104. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user devices 102 (e.g., user devices 1024, 1026, 1028) and APs 104 may include one or more communications antennas. The one or more communications antennas may be any suitable type of antennas corresponding to the communications protocols used by the user devices 102 (e.g., user devices 1024, 1026 and 1028) and APs 104. Some non-limiting examples of suitable communications antennas include Wi-Fi antennas, Institute of Electrical and Electronics Engineers (IEEE) 802.11 family of standards compatible antennas, directional antennas, nondirectional antennas, dipole antennas, folded dipole antennas, patch antennas, multiple-input multiple-output (MIMO) antennas, omnidirectional antennas, quasi-omnidirectional antennas, or the like. The one or more communications antennas may be communicatively coupled to a radio component to transmit and/or receive signals, such as communications signals to and/or from the user devices 102 and/or APs 104.

Any of the user devices 102 (e.g., user devices 1024, 1026, 1028) and APs 104 may be configured to perform directional transmission and/or directional reception in conjunction with wirelessly communicating in a wireless network. Any of the user devices 102 (e.g., user devices 1024, 1026, 1028) and APs 104 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user devices 102 (e.g., user devices 1024, 1026, 1028) and APs 104 may be configured to perform any given directional transmission towards one or more defined transmit sectors. Any of the user devices 102 (e.g., user devices 1024, 1026, 1028) and APs 104 may be configured to perform any given directional reception from one or more defined receive sectors.

MIMO beamforming in a wireless network may be accomplished using radio frequency (RF) beamforming and/or digital beamforming. In some embodiments, in performing a given MIMO transmission, the user devices 102 and/or APs 104 may be configured to use all or a subset of its one or more communications antennas to perform MIMO beamforming.

Any of the user devices 102 (e.g., user devices 1024, 1026, 1028) and APs 104 may include any suitable radio and/or transceiver for transmitting and/or receiving radio frequency (RF) signals in the bandwidth and/or channels corresponding to the communications protocols utilized by any of the user devices 102 and APs 104 to communicate with each other. The radio components may include hardware and/or software to modulate and/or demodulate communications signals according to preestablished transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

Embodiments are provided to use Wi-Fi sensing technology to enable Wi-Fi devices to reduce RF energy exposure to humans and animals in their coverage area.

Wi-Fi sensing is a Wi-Fi technology to perform sensor- and radar-like applications such as:
- Motion detection: Detect environmental changes between devices including those resultant from the motion of a person (e.g., https://venturebeat.com/2020/09/10/wi-fi-sensing-adds-motion-detection-and-gesture-recognition-to-your-wireless-network/);
- Remote patient monitoring: Passively monitor patient movements, including fall detection and other movement alerts (e.g., https://aerial.ai/applications);
- Passive localization: Determine the location of a human, animal, or object that does not carry a wireless device in a pre-mapped/scanned/trained location (e.g., https://wcsng.ucsd.edu/localization.html);
- Livelihood detection: Discriminate inanimate objects from animate objects through the detection of vital signs and fine movement (e.g., https://mentor.ieee.org/802.11/dcn/19/11-19-1852-00-SENS-in-car-sensing-a-60ghz-usage-example.pptx);
- Vital signs monitoring: Contactless estimation of breathing rate and/or heart rate (e.g., https://www.engadget.com/2017-10-09-origin-wireless-motion-detection-breathing-rate-sensor.html).

Wi-Fi sensing implementations typically includes two categories:
- Same device transmits and receives a waveform -like conventional radars (e.g., Frequency Modulated Continuous Wave (FMCW) technology). It is usually implemented using mmWave technology (IEEE 802.11ad/ay) and Doppler processing. Typically it is used for short-range, high-resolution applications such as gesture recognition and vital signs monitoring;
- Sensing is performed by tracking one or more wireless links between one "sensing" STA (e.g., an AP) and one or more transmitting STAs (clients, for example). It is typically implemented using sub-7 GHz Wi-Fi technology and makes use of artificial intelligence (AI)/ machine learning (ML) algorithms to classify time-variations in the wireless channels into events/activities. It supports wide coverage (e.g., single-family home) and lower-resolution applications such as motion detection and passive localization.

Radiation safety mechanism disclosed in the disclosure employs Wi-Fi sensing technology, as mentioned above or described in IEEE 802.11bf, to provide for improved radiation safety (e.g., specific absorption rate (SAR) control). In such mechanisms, Wi-Fi sensing is at least partially controlled by the radiation safety mechanism.

To meet SAR standards defined by regulatory bodies such as the Federal Communications Commission (FCC), wireless devices such as mobile phones and tablets typically use proximity sensors to perform human body detection and SAR control. Such sensors are usually capacitive and discriminate between inanimate objects or human body by detecting the permittivity of surfaces in contact or close proximity with the device.

While the power of a radio signal decreases with the square of the distance, a person who is not touching or in close proximity of a wireless device may still be exposed to non-negligible RF energy levels in situations such as (1) when it is located a few feet or meters from a transmitting device (such as a Wi-Fi AP); (2) when it is in the line-of-sight (LoS) of a transmitting device for an extended period of time; and (3) when it is an environment with multiple transmitting devices, among others.

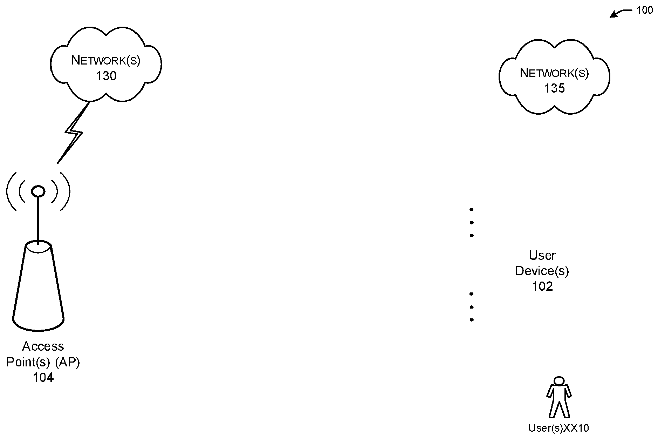

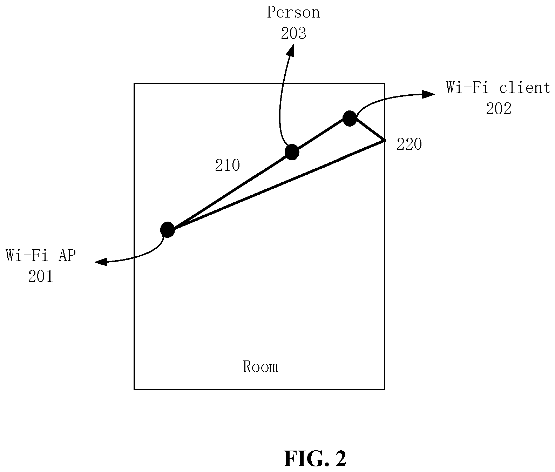

FIG. 2 is a schematic diagram of an exemplary scenario in accordance with some embodiments of the disclosure. FIG. 2illustrats a possible realization of the disclosed mechanism. Using Wi-Fi sensing, a Wi-Fi AP (201)-Wi-Fi client (202) pair detects the presence of an "object" in its LoS path 210, determines that the "object" is a human 203, and estimates that the human 203 is about a meter away from the Wi-Fi client 202. To reduce RF energy exposure to the detected human 203, transmit adaptations (such as reducing transmit power levels and/or adjusting beamforming settings, e.g., path 220) are performed.

The radiation safety mechanism may include Sections 1-3 below, for example.

### 1. Scanning the environment for animate object detection

Using Wi-Fi sensing, Wi-Fi devices may scan the environment for objects that could be animate object (including but not limited to humans and/or animals). As discussed above, this operation may be performed with Wi-Fi technology either by using Doppler analysis or by detecting and classifying variations in the wireless channels (e.g. CSI) over time and/or space. The present disclosure is not limited in this respect.

A map of the environment is obtained with the scanning operation that represents the coverage area of the Wi-Fi devices used in the operation (and therefore includes the possible humans and animals that would be exposed to RF energy by their transmissions). The scanning operation may be performed with a certain time periodicity to keep the map updated.

In addition to detecting objects, the mechanism is, with the use of Wi-Fi sensing, also able to discriminate detected objects between inanimate objects or human/animal body. This operation could be performed in different ways depending on the Wi-Fi sensing capabilities of the devices that participate in the operation, including:
- Motion could be identified, and possibly its location estimated, by comparing measurements of consecutive scanning/mapping operations;
- Motion could be identified by detecting time-variations in the wireless channels (e.g., CSI) resulting from either large-scale (e.g., person walking) or small-scale (e.g., hand waving) movement within the area of interest;
- If one or more of the WLAN devices performing scanning support Doppler analysis, the system may also be able to detect the presence of humans through heart/breathing rate estimation.

The scanning operation is divided into "coarse" and "fine" mapping operations. To keep its overhead at a reasonable level, the radiation safety mechanism may trigger low-overhead WLAN sensing procedures to be performed for the sole purpose of detecting movement ("coarse" mapping). If movement is not detected, the same operation continues to be performed with a periodic interval. If movement is detected, a different WLAN sensing procedure is performed to discriminate between humans/animals from inanimate objects ("fine" mapping). In this case, periodic "coarse" mapping is resumed with a given periodicity after "fine" mapping is completed.

More detailed information about the detected animate object may be obtained with advanced imaging and Wi-Fi sensing techniques that could allow the mechanism to, for example, discriminate different body parts of the human/animal (such as its head) and offer a finer level of RF exposure protection to more sensitive body parts.

### 2. Estimating distance to detected humans or location of the detected humans

To enable Wi-Fi devices to estimate the RF power exposure of its transmissions to humans and make appropriate adaptations, an estimate of the distance (or range) of each device to each detected human or the location of the humans may be obtained.

A possible approach to estimate the distance or location of a human is by comparing the outcome of consecutive scanning/mapping operations. Changes over time may be understood as a human moving about the environment. At the same time, there are more sophisticated Wi-Fi sensing approaches to passively determine the location of a person.

In addition to estimating the distance of each device to each detected human or the location of the detected human (absolute location or relative location to the device), RF exposure control can also be enhanced by determining whether the detected humans are in the LoS of any transmission. If they are in the LoS, increased levels of radiation safety mechanism may be provided.

It should be noted that estimating the location of individuals within a given environment may require the location, or relative location, of the Wi-Fi devices performing the mapping operation to be known. The relative location of such devices could be estimated with the use of fine-time measurement (FTM) and ranging operations already defined in IEEE 802.11 and IEEE802.11az, respectively.

It should also be noted that both mechanisms described in 1 (Scanning the environment for human detection) and 2 (Estimating distance to detected humans or location of the detected humans) can be enhanced (e.g., the reliability and accuracy in which the WLAN devices detect, identify, and locate humans is improved) by using any additional available information, including that provided by sensors such as gyroscopes and magnetometers (to determine changes in orientation of a device) and also by capacitive proximity sensors (human presence detection).

### 3. Transmit and network adaptations to reduce RF exposure

With an estimate of the distance between Wi-Fi devices and humans located in the same environment, Wi-Fi devices/network may determine that: a) if a detected human is close to at least one Wi-Fi device then SAR protection is needed; or b) if a detected human is far from a given Wi-Fi device, the device does not need to employ a radiation safety mechanism towards this particular human.

With the use of information obtained via the Wi-Fi sensing, RF energy exposure to humans can be reduced with transmit and network adaptations (such as beamforming or MIMO settings, as well as transmitting time or transmitting power). For example, this may be achieved by determining the RF power level that would be transmitted towards a given area and estimating the power that a human would be exposed to. For example, this would require information about a device's antenna pattern (e.g., beam width and full lobe radiation), possibly among others.

Information about RF exposure/SAR requirements set by local regulatory bodies, or even more stringent requirements/settings set by the device's manufacturer or its user, could be used by the disclosed mechanism. For example, a manufacturer and/or user could set a sensitivity level (that meets regulatory limits) that would lead to greater safety limits (that would result in less energy transmitted and possibly result in poorer communications performance).

As previously defined, continued scanning/mapping is important to make sure humans who were in a "safe" region don't move into an "unsafe" region.

In the present disclosure, the animate object is described with use of human as an example. The animate object may include an animal and the like. However, the present disclosure is not limited in this respect.

Below, protocol aspect of the radiation safety mechanism based on Wi-Fi sensing will be described.

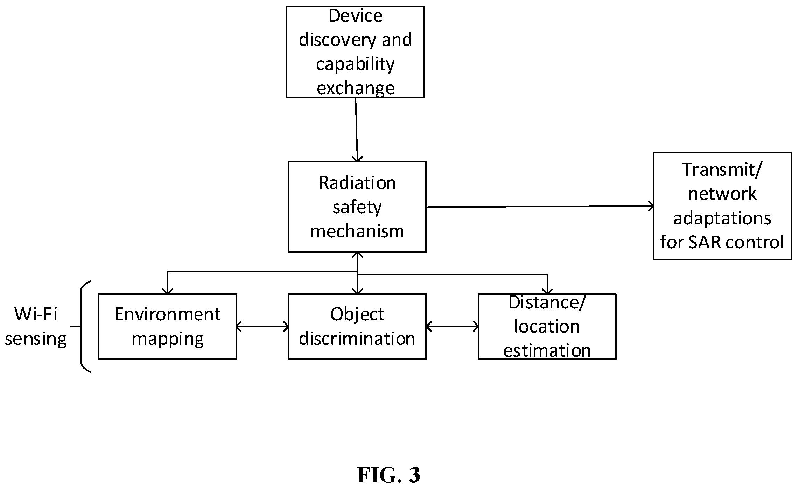

FIG. 3 is a schematic diagram of SAR control in accordance with some embodiments of the disclosure. It illustrates a possible realization of the radiation safety mechanism based on Wi-Fi sensing. As shown in FIG. 3, the realization may include, for example, device discovery and capability exchange module, radiation safety mechanism module, transmit/network adaptations for SAR control module, environment mapping module, object discrimination module and distance/location estimation module. The realization may include more or less modules, which is not limited in the disclosure. Wi-Fi sensing functions may involves environment mapping module, object discrimination module and distance/location estimation module, and they may carry out operations as described above. The device discovery and capability exchange module may perform a discovery process. The radiation safety mechanism module may perform the radiation safety mechanism based on Wi-Fi sensing. The transmit/network adaptations for SAR control module may adapt parameter(s) for SAR control.

In the disclosed radiation safety mechanism, the station that initiates, or controls/manages, the mechanism may "discover" STAs in its coverage area and/or BSS (or even extended BSS) that support:
- Wi-Fi sensing; and/or
- SAR control.

The discovery process may be performed by an exchange of device capabilities during network association and/or by a probing mechanism. The capabilities may indicate that a station supports one or more of the functions required by the disclosed SAR protection mechanism, including but not limited to:
- Environment mapping support,
- Object/human discrimination support,
- Distance and/or location estimation support, and/or
- Support in device-level or network-level adaptation.

Devices that support one or more of the Wi-Fi sensing capabilities required by the radiation safety mechanism but do not support the radiation safety mechanism itself may still be used by the mechanism in order to improve its ability of detecting objects, object discrimination, and distance/location estimation.

The Wi-Fi sensing functions required for the radiation safety mechanism would follow the concepts and procedures (such as frame exchanges) defined in IEEE 802.11bf. However, in the proposed mechanism, the Wi-Fi sensing operation, including parameters used, is at least partially controlled by the radiation safety mechanism. For example:
- When performing environment mapping, Wi-Fi sensing may be performed with the frequency/periodicity necessary for the radiation safety mechanism to meet required performance metrics. In addition, to support SAR control, parameters of the Wi-Fi sensing-based environment mapping operation may be changed depending on recent measurement results; for example, the interval in which environment mapping is updated could be shortened if motion is detected;
- To support object discrimination, standard support is required to enable different capabilities and functions of the devices that participate in the radiation safety mechanism. As discussed in Section 1, discrimination can be achieved by a number of approaches, e.g., detecting time-variations in CSI estimates to Doppler analysis. Standard support may be used to create the signaling necessary to trigger measurements (and specify their type) and to enable the feedback/reporting of obtained measurements to the station responsible for fusing data/acting on the measurements to enable radiation control;
- Once humans are detected in the coverage area of devices participating in SAR control, the radiation safety mechanism would schedule transmissions to obtain an estimate of the distance between the detected human(s) and devices, or even the relative location between human(s) and devices. This process could be accomplished with any of the mechanisms discussed in Section 2.

Once the Wi-Fi sensing functions used to support the radiation safety mechanism are completed, the mechanism determines device-level and possibly network-level adaptations that would reduce RF energy exposure to humans and animals in their coverage area. Possible adaptations include transmit power control, antenna selection, update of beamforming matrices, fine beamforming for directional transmissions, fine receive beamforming, and routing of traffic through different network paths (in a mesh network configuration), among others. The key point in this aspect is the use of Wi-Fi sensing measurements to drive device-/network-level adaptations for SAR control.

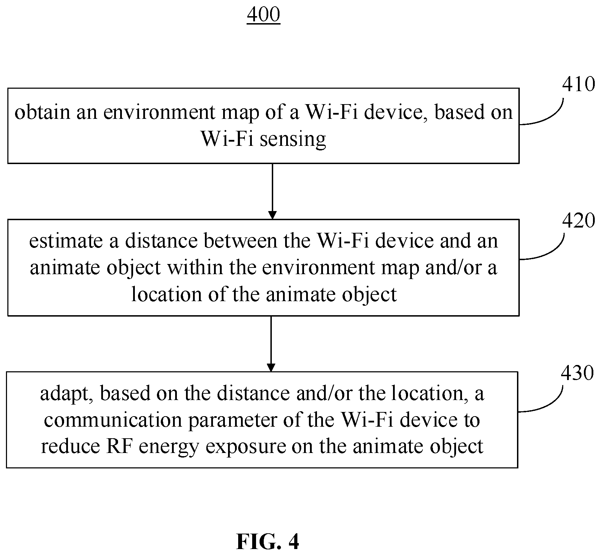

FIG. 4 is a flowchart of a method 400 for SAR control in accordance with some embodiments of the disclosure. The method 400 may include steps 410, 420 and 430.

At 410, an environment map of a Wi-Fi device may be obtained based on Wi-Fi sensing by a detecting module of the Wi-Fi device.

At 420, a distance between the Wi-Fi device and an animate object within the environment map and/or a location of the animate object may be estimated.

At 430, based on the distance and/or the location, a communication parameter of the Wi-Fi device may be adapted to reduce RF energy exposure on the animate object.

The method 400 may include more or less steps, which is not limited in the disclosure.

In some embodiments, the environment map further includes an inanimate object, and the animate object is discriminate from the inanimate object.

In some embodiments, the environment map is updated periodically.

In some embodiments, the communication parameter is to indicate a transmitting power of the Wi-Fi device, and the transmitting power of the Wi-Fi device is decreased to reduce the RF energy exposure on the animate object.

In some embodiments, the communication parameter is to indicate an antenna setting of the Wi-Fi device, and the antenna setting of the Wi-Fi device is changed to reduce the RF energy exposure on the animate object.

In some embodiments, the location of the animate object is estimated by comparing consecutive sensing results of the animate object.

In some embodiments, the distance is determined to be less than a threshold, and the communication parameter of the Wi-Fi device is adapted to reduce RF energy exposure on the animate object. The threshold is predetermined or changed based on signaling.

In some embodiments, it is determined that the animate object is located at a LoS path between the Wi-Fi device and another Wi-Fi device, and the communication parameter of the Wi-Fi device is adapted to reduce RF energy exposure on the animate object.

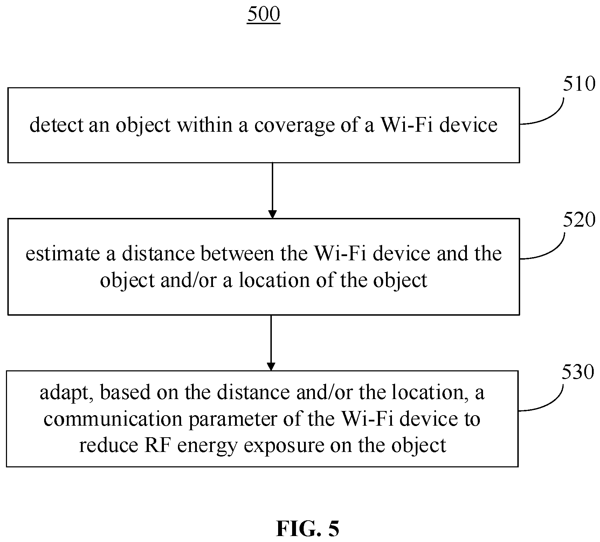

FIG. 5 is a flowchart of a method 500 for SAR control in accordance with some embodiments of the disclosure. The method 500 may include steps 510, 520 and 530.

At 510, an object within a coverage of a Wireless Fidelity (Wi-Fi) device is detected.

At 520, a distance between the Wi-Fi device and the object and/or a location of the object is estimated.

At 530, based on the distance and/or the location, a communication parameter of the Wi-Fi device is adapted to reduce RF energy exposure on the object.

The method 500 may include more or less steps, which is not limited in the disclosure.

In some embodiments, based on a coarse sensing procedure, the object for a movement of the object is detected; and the object is detected based on a fine sensing procedure, if the movement is detected.

In some embodiments, the object is detected based on consecutive sensing results, variation in a wireless channel of the Wi-Fi device, and/or Doppler analysis.

In some embodiments, the object is detected periodically.

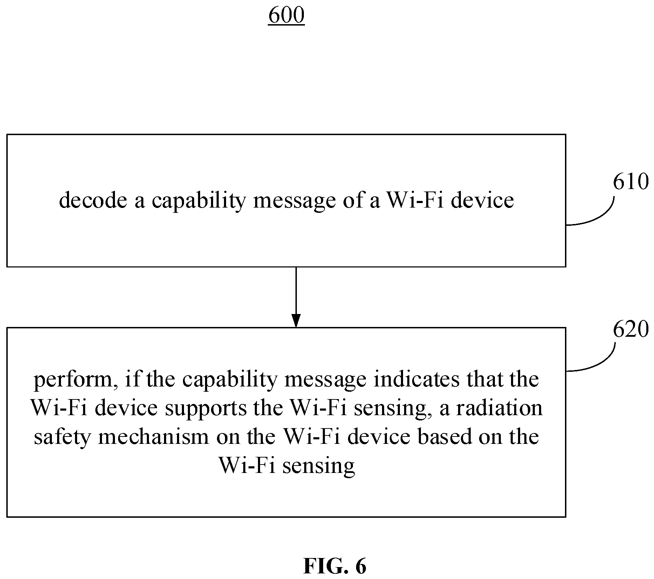

FIG. 6 is a flowchart of a method 600 for exchanging of device capability in SAR control in accordance with some embodiments of the disclosure. The method 600 may include steps 610 and 620.

At 610, a capability message of a Wi-Fi device is decoded. The capability message is to indicate capability of the Wi-Fi device in support of Wi-Fi sensing.

At 620, if the capability message indicates that the Wi-Fi device supports the Wi-Fi sensing, a radiation safety mechanism is performed on the Wi-Fi device based on the Wi-Fi sensing.

The method 600 may include more or less steps, which is not limited in the disclosure.

In some embodiments, the capability message is further to indicate capability of the Wi-Fi device in support of the radiation safety mechanism.

In some embodiments, the Wi-Fi sensing includes environment scanning, object discrimination, and/or distance/location estimation.

With the radiation safety mechanism disclosed in the disclosure, RF exposure to animate object can be reduced by using Wi-Fi sensing.

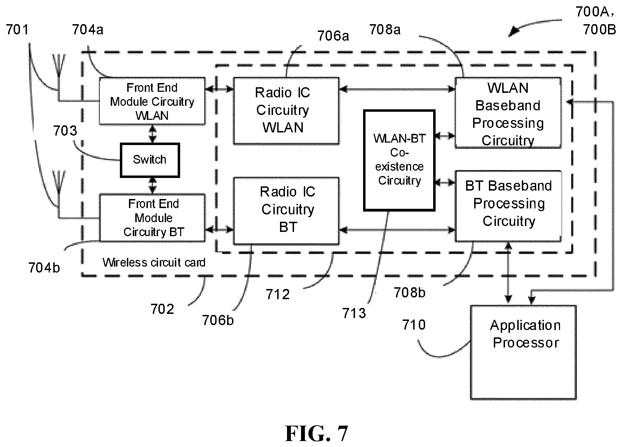

FIG. 7 is a block diagram of a radio architecture 700A, 700B in accordance with some embodiments that may be implemented in any one of APs 104 and/or the user devices 102 of FIG. 1. Radio architecture 700A, 700B may include radio front-end module (FEM) circuitry 704a-b, radio IC circuitry 706a-b and baseband processing circuitry 708a-b. Radio architecture 700A, 700B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 704a-b may include a WLAN or Wi-Fi FEM circuitry 704a and a Bluetooth (BT) FEM circuitry 704b. The WLAN FEM circuitry 704a may include a receive signal path comprising circuitry configured to operate on WLAN RF signals received from one or more antennas 701, to amplify the received signals and to provide the amplified versions of the received signals to the WLAN radio IC circuitry 706a for further processing. The BT FEM circuitry 704b may include a receive signal path which may include circuitry configured to operate on BT RF signals received from one or more antennas 701, to amplify the received signals and to provide the amplified versions of the received signals to the BT radio IC circuitry 706b for further processing. FEM circuitry 704a may also include a transmit signal path which may include circuitry configured to amplify WLAN signals provided by the radio IC circuitry 706a for wireless transmission by one or more of the antennas 701. In addition, FEM circuitry 704b may also include a transmit signal path which may include circuitry configured to amplify BT signals provided by the radio IC circuitry 706b for wireless transmission by the one or more antennas. In the embodiment of FIG. 7, although FEM 704a and FEM 704b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 706a-b as shown may include WLAN radio IC circuitry 706a and BT radio IC circuitry 706b. The WLAN radio IC circuitry 706a may include a receive signal path which may include circuitry to down-convert WLAN RF signals received from the FEM circuitry 704a and provide baseband signals to WLAN baseband processing circuitry 708a. BT radio IC circuitry 706b may in turn include a receive signal path which may include circuitry to down-convert BT RF signals received from the FEM circuitry 704b and provide baseband signals to BT baseband processing circuitry 708b. WLAN radio IC circuitry 706a may also include a transmit signal path which may include circuitry to up-convert WLAN baseband signals provided by the WLAN baseband processing circuitry 708a and provide WLAN RF output signals to the FEM circuitry 704a for subsequent wireless transmission by the one or more antennas 701. BT radio IC circuitry 706b may also include a transmit signal path which may include circuitry to up-convert BT baseband signals provided by the BT baseband processing circuitry 708b and provide BT RF output signals to the FEM circuitry 704b for subsequent wireless transmission by the one or more antennas 701. In the embodiment of FIG. 7, although radio IC circuitries 706a and 706b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuitry 708a-b may include a WLAN baseband processing circuitry 708a and a BT baseband processing circuitry 708b. The WLAN baseband processing circuitry 708a may include a memory, such as, for example, a set of RAM arrays in a Fast Fourier Transform or Inverse Fast Fourier Transform block (not shown) of the WLAN baseband processing circuitry 708a. Each of the WLAN baseband circuitry 708a and the BT baseband circuitry 708b may further include one or more processors and control logic to process the signals received from the corresponding WLAN or BT receive signal path of the radio IC circuitry 706a-b, and to also generate corresponding WLAN or BT baseband signals for the transmit signal path of the radio IC circuitry 706a-b. Each of the baseband processing circuitries 708a and 708b may further include physical layer (PHY) and medium access control layer (MAC) circuitry, and may further interface with a device for generation and processing of the baseband signals and for controlling operations of the radio IC circuitry 706a-b.

Referring still to FIG. 7, according to the shown embodiment, WLAN-BT coexistence circuitry 713 may include logic providing an interface between the WLAN baseband circuitry 708a and the BT baseband circuitry 708b to enable use cases requiring WLAN and BT coexistence. In addition, a switch 703 may be provided between the WLAN FEM circuitry 704a and the BT FEM circuitry 704b to allow switching between the WLAN and BT radios according to application needs. In addition, although the antennas 701 are depicted as being respectively connected to the WLAN FEM circuitry 704a and the BT FEM circuitry 704b, embodiments include within their scope the sharing of one or more antennas as between the WLAN and BT FEMs, or the provision of more than one antenna connected to each of FEM 704a or 704b.

In some embodiments, the front-end module circuitry 704a-b, the radio IC circuitry 706a-b, and baseband processing circuitry 708a-b may be provided on a single radio card, such as wireless radio card 702. In some other embodiments, the one or more antennas 701, the FEM circuitry 704a-b and the radio IC circuitry 706a-b may be provided on a single radio card. In some other embodiments, the radio IC circuitry 706a-b and the baseband processing circuitry 708a-b may be provided on a single chip or integrated circuit (IC), such as IC 712.

In some embodiments, the wireless radio card 702 may include a WLAN radio card and may be configured for Wi-Fi communications, although the scope of the embodiments is not limited in this respect. In some of these embodiments, the radio architecture 700A, 700B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 700A, 700B may be part of a Wi-Fi communication station (STA) such as a wireless access point (AP), a base station or a mobile device including a Wi-Fi device. In some of these embodiments, radio architecture 700A, 700B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.11ax standards and/or proposed specifications for WLANs, although the scope of embodiments is not limited in this respect. Radio architecture 700A, 700B may also be suitable to transmit and/or receive communications in accordance with other techniques and standards.

In some embodiments, the radio architecture 700A, 700B may be configured for high-efficiency Wi-Fi (HEW) communications in accordance with the IEEE 802.11ax standard. In these embodiments, the radio architecture 700A, 700B may be configured to communicate in accordance with an OFDMA technique, although the scope of the embodiments is not limited in this respect.

In some other embodiments, the radio architecture 700A, 700B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 7, the BT baseband circuitry 708b may be compliant with a Bluetooth (BT) connectivity standard such as Bluetooth, Bluetooth 8.0 or Bluetooth 6.0, or any other iteration of the Bluetooth Standard.

In some embodiments, the radio architecture 700A, 700B may include other radio cards, such as a cellular radio card configured for cellular (e.g., 5GPP such as LTE, LTE-Advanced or 5G communications).

In some IEEE 802.11 embodiments, the radio architecture 700A, 700B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80+80 MHz (160MHz) (with non-contiguous bandwidths). In some embodiments, a 720 MHz channel bandwidth may be used. The scope of the embodiments is not limited with respect to the above center frequencies however.

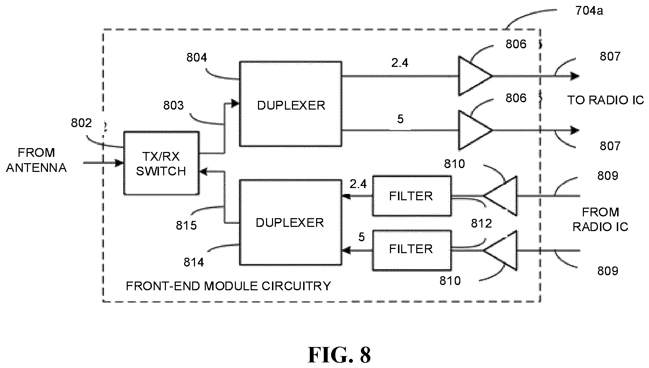

FIG. 8 illustrates WLAN FEM circuitry 704a in accordance with some embodiments. Although the example of FIG. 8 is described in conjunction with the WLAN FEM circuitry 704a, the example of FIG. 8 may be described in conjunction with the example BT FEM circuitry 704b (FIG. 7), although other circuitry configurations may also be suitable.

In some embodiments, the FEM circuitry 704a may include a TX/RX switch 802 to switch between transmit mode and receive mode operation. The FEM circuitry 704a may include a receive signal path and a transmit signal path. The receive signal path of the FEM circuitry 704a may include a low-noise amplifier (LNA) 806 to amplify received RF signals 803 and provide the amplified received RF signals 807 as an output (e.g., to the radio IC circuitry 706a-b (FIG. 7)). The transmit signal path of the circuitry 704a may include a power amplifier (PA) to amplify input RF signals 809 (e.g., provided by the radio IC circuitry 706a-b), and one or more filters 812, such as band-pass filters (BPFs), low-pass filters (LPFs) or other types of filters, to generate RF signals 815 for subsequent transmission (e.g., by one or more of the antennas 701 (FIG. 7)) via an example duplexer 814.

In some dual-mode embodiments for Wi-Fi communication, the FEM circuitry 704a may be configured to operate in either the 2.4 GHz frequency spectrum or the 5 GHz frequency spectrum. In these embodiments, the receive signal path of the FEM circuitry 704a may include a receive signal path duplexer 804 to separate the signals from each spectrum as well as provide a separate LNA 806 for each spectrum as shown. In these embodiments, the transmit signal path of the FEM circuitry 704a may also include a power amplifier 810 and a filter 812, such as a BPF, an LPF or another type of filter for each frequency spectrum and a transmit signal path duplexer 814 to provide the signals of one of the different spectrums onto a single transmit path for subsequent transmission by the one or more of the antennas 701 (FIG. 7). In some embodiments, BT communications may utilize the 2.4 GHz signal paths and may utilize the same FEM circuitry 704a as the one used for WLAN communications.

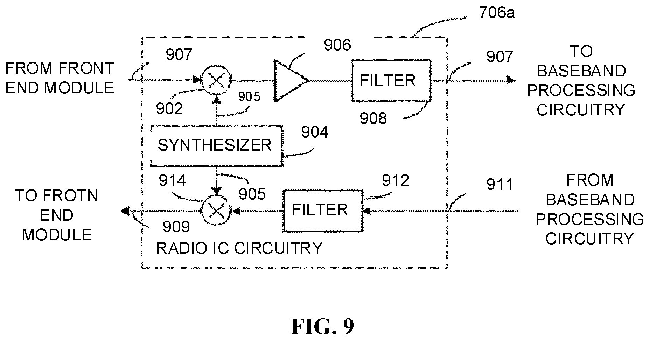

FIG. 9 illustrates radio IC circuitry 706a in accordance with some embodiments. The radio IC circuitry 706a is one example of circuitry that may be suitable for use as the WLAN or BT radio IC circuitry 706a/706b (FIG. 7), although other circuitry configurations may also be suitable. Alternatively, the example of FIG. 9 may be described in conjunction with the example BT radio IC circuitry 706b.

In some embodiments, the radio IC circuitry 706a may include a receive signal path and a transmit signal path. The receive signal path of the radio IC circuitry 706a may include at least mixer circuitry 902, such as, for example, down-conversion mixer circuitry, amplifier circuitry 906 and filter circuitry 908. The transmit signal path of the radio IC circuitry 706a may include at least filter circuitry 912 and mixer circuitry 914, such as, for example, up-conversion mixer circuitry. Radio IC circuitry 706a may also include synthesizer circuitry 904 for synthesizing a frequency 905 for use by the mixer circuitry 902 and the mixer circuitry 914. The mixer circuitry 902 and/or 914 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 9 illustrates only a simplified version of a radio IC circuitry, and may include, although not shown, embodiments where each of the depicted circuitries may include more than one component. For instance, mixer circuitry 914 may each include one or more mixers, and filter circuitries 908 and/or 912 may each include one or more filters, such as one or more BPFs and/or LPFs according to application needs. For example, when mixer circuitries are of the direct-conversion type, they may each include two or more mixers.

In some embodiments, mixer circuitry 902 may be configured to down-convert RF signals 807 received from the FEM circuitry 704a-b (FIG. 7) based on the synthesized frequency 905 provided by synthesizer circuitry 904. The amplifier circuitry 906 may be configured to amplify the down-converted signals and the filter circuitry 908 may include an LPF configured to remove unwanted signals from the down-converted signals to generate output baseband signals 907. Output baseband signals 907 may be provided to the baseband processing circuitry 708a-b (FIG. 7) for further processing. In some embodiments, the output baseband signals 907 may be zero-frequency baseband signals, although this is not a requirement. In some embodiments, mixer circuitry 902 may comprise passive mixers, although the scope of the embodiments is not limited in this respect.

In some embodiments, the mixer circuitry 914 may be configured to up-convert input baseband signals 911 based on the synthesized frequency 905 provided by the synthesizer circuitry 904 to generate RF output signals 809 for the FEM circuitry 704a-b. The baseband signals 911 may be provided by the baseband processing circuitry 708a-b and may be filtered by filter circuitry 912. The filter circuitry 912 may include an LPF or a BPF, although the scope of the embodiments is not limited in this respect.

In some embodiments, the mixer circuitry 902 and the mixer circuitry 914 may each include two or more mixers and may be arranged for quadrature down-conversion and/or up-conversion respectively with the help of synthesizer 904. In some embodiments, the mixer circuitry 902 and the mixer circuitry 914 may each include two or more mixers each configured for image rejection (e.g., Hartley image rejection). In some embodiments, the mixer circuitry 902 and the mixer circuitry 914 may be arranged for direct down-conversion and/or direct up-conversion, respectively. In some embodiments, the mixer circuitry 902 and the mixer circuitry 914 may be configured for super-heterodyne operation, although this is not a requirement.

Mixer circuitry 902 may comprise, according to one embodiment: quadrature passive mixers (e.g., for the in-phase (I) and quadrature phase (Q) paths). In such an embodiment, RF input signal 807 from FIG. 9 may be down-converted to provide I and Q baseband output signals to be transmitted to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 905 of synthesizer 904 (FIG. 9). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 807 (FIG. 8) may comprise a balanced signal, although the scope of the embodiments is not limited in this respect. The I and Q baseband output signals may be provided to low-noise amplifier, such as amplifier circuitry 906 (FIG. 9) or to filter circuitry 908 (FIG. 9).

In some embodiments, the output baseband signals 907 and the input baseband signals 911 may be analog baseband signals, although the scope of the embodiments is not limited in this respect. In some alternate embodiments, the output baseband signals 907 and the input baseband signals 911 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 904 may be a fractional-N synthesizer or a fractional N/N+1 synthesizer, although the scope of the embodiments is not limited in this respect as other types of frequency synthesizers may be suitable. For example, synthesizer circuitry 904 may be a delta-sigma synthesizer, a frequency multiplier, or a synthesizer comprising a phase-locked loop with a frequency divider. According to some embodiments, the synthesizer circuitry 904 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuitry 904 may be provided by a voltage controlled oscillator (VCO), although that is not a requirement. A divider control input may further be provided by either the baseband processing circuitry 708a-b (FIG. 7) depending on the desired output frequency 905. In some embodiments, a divider control input (e.g., N) may be determined from a look-up table (e.g., within a Wi-Fi card) based on a channel number and a channel center frequency as determined or indicated by the example application processor 710. The application processor 710 may include, or otherwise be connected to, one of the example security signal converter 101 or the example received signal converter 103 (e.g., depending on which device the example radio architecture is implemented in).

In some embodiments, synthesizer circuitry 904 may be configured to generate a carrier frequency as the output frequency 905, while in other embodiments, the output frequency 905 may be a fraction of the carrier frequency (e.g., one-half the carrier frequency, one-third the carrier frequency). In some embodiments, the output frequency 905 may be a LO frequency (fLO).

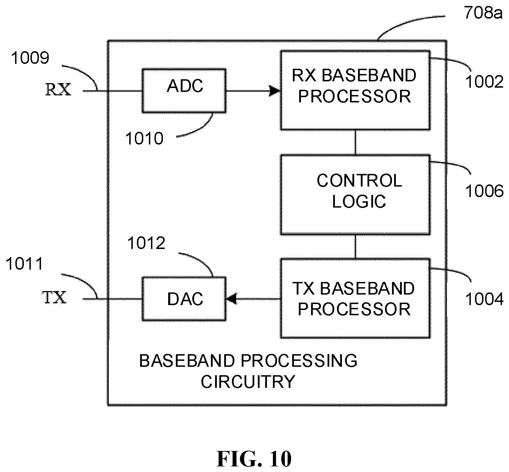

FIG. 10 illustrates a functional block diagram of baseband processing circuitry 708a in accordance with some embodiments. The baseband processing circuitry 708a is one example of circuitry that may be suitable for use as the baseband processing circuitry 708a (FIG. 7), although other circuitry configurations may also be suitable. Alternatively, the example of FIG. 10 may be used to implement the example BT baseband processing circuitry 708b of FIG. 7.

The baseband processing circuitry 708a may include a receive baseband processor (RX BBP) 1002 for processing receive baseband signals 1009 provided by the radio IC circuitry 706a-b (FIG. 7) and a transmit baseband processor (TX BBP) 1004 for generating transmit baseband signals 1011 for the radio IC circuitry 706a-b. The baseband processing circuitry 708a may also include control logic 1006 for coordinating the operations of the baseband processing circuitry 708a.

In some embodiments (e.g., when analog baseband signals are exchanged between the baseband processing circuitry 708a-b and the radio IC circuitry 706a-b), the baseband processing circuitry 708a may include ADC 1010 to convert analog baseband signals 1009 received from the radio IC circuitry 706a-b to digital baseband signals for processing by the RX BBP 1002. In these embodiments, the baseband processing circuitry 708a may also include DAC 1012 to convert digital baseband signals from the TX BBP 1004 to analog baseband signals 1011.

In some embodiments that communicate OFDM signals or OFDMA signals, such as through baseband processor 708a, the transmit baseband processor 1004 may be configured to generate OFDM or OFDMA signals as appropriate for transmission by performing an inverse fast Fourier transform (IFFT). The receive baseband processor 1002 may be configured to process received OFDM signals or OFDMA signals by performing an FFT. In some embodiments, the receive baseband processor 1002 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 7, in some embodiments, the antennas 701 (FIG. 7) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 701 may each include a set of phased-array antennas, although embodiments are not so limited.

Although the radio architecture 700A, 700B is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

FIG. 11 shows a functional diagram of an exemplary communication station 1100, in accordance with one or more example embodiments of the disclosure. In one embodiment, FIG. 11 illustrates a functional block diagram of a communication station that may be suitable for use as the AP 104 (FIG. 1) or the user device 102 (FIG. 1) in accordance with some embodiments. The communication station 1100 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 1100 may include communications circuitry 1102 and a transceiver 1110 for transmitting and receiving signals to and from other communication stations using one or more antennas 1101. The communications circuitry 1102 may include circuitry that can operate the physical layer (PHY) communications and/or medium access control (MAC) communications for controlling access to the wireless medium, and/or any other communications layers for transmitting and receiving signals. The communication station 1100 may also include processing circuitry 1106 and memory 1108 arranged to perform the operations described herein. In some embodiments, the communications circuitry 1102 and the processing circuitry 1106 may be configured to perform operations detailed in the above figures, diagrams, and flows.

In accordance with some embodiments, the communications circuitry 1102 may be arranged to contend for a wireless medium and configure frames or packets for communicating over the wireless medium. The communications circuitry 1102 may be arranged to transmit and receive signals. The communications circuitry 1102 may also include circuitry for modulation/demodulation, upconversion/downconversion, filtering, amplification, etc. In some embodiments, the processing circuitry 1106 of the communication station 1100 may include one or more processors. In other embodiments, two or more antennas 1101 may be coupled to the communications circuitry 1102 arranged for transmitting and receiving signals. The memory 1108 may store information for configuring the processing circuitry 1106 to perform operations for configuring and transmitting message frames and performing the various operations described herein. The memory 1108 may include any type of memory, including non-transitory memory, for storing information in a form readable by a machine (e.g., a computer). For example, the memory 1108 may include a computer-readable storage device, read-only memory (ROM), random-access memory (RAM), magnetic disk storage media, optical storage media, flash-memory devices and other storage devices and media.

In some embodiments, the communication station 1100 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 1100 may include one or more antennas 1101. The antennas 1101 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 1100 may include one or more of a keyboard, a display, a non-volatile memory port, multiple antennas, a graphics processor, an application processor, speakers, and other mobile device elements. The display may be a liquid crystal display (LCD) screen including a touch screen.

Although the communication station 1100 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field- programmable gate arrays (FPGAs), application specific integrated circuits (ASICs), radio- frequency integrated circuits (RFICs) and combinations of various hardware and logic circuitry for performing at least the functions described herein. In some embodiments, the functional elements of the communication station 1100 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 1100 may include one or more processors and may be configured with instructions stored on a computer-readable storage device.

The exemplary communication station 1100 may further include a detector (not shown) to perform the operations in Section 1. Alternatively, the detector may not be included in the exemplary communication station 1100, but it may provide scanning results to the exemplary communication station 1100 for SAR control.

FIG. 12 illustrates a block diagram of an example of a machine or system 1200 upon which any one or more of the techniques (e.g., methodologies) discussed herein may be performed. In other embodiments, the machine 1200 may operate as a standalone device or may be connected (e.g., networked) to other machines. In a networked deployment, the machine 1200 may operate in the capacity of a server machine, a client machine, or both in server-client network environments. In an example, the machine 1200 may act as a peer machine in peer-to-peer (P2P) (or other distributed) network environments. The machine 1200 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 1200 may include a hardware processor 1202 (e.g., a central processing unit (CPU), a graphics processing unit (GPU), a hardware processor core, or any combination thereof), a main memory 1204 and a static memory 1206, some or all of which may communicate with each other via an interlink (e.g., bus) 1208. The machine 1200 may further include a power management device 1232, a graphics display device 1210, an alphanumeric input device 1212 (e.g., a keyboard), and a user interface (UI) navigation device 1214 (e.g., a mouse). In an example, the graphics display device 1210, alphanumeric input device 1212, and UI navigation device 1214 may be a touch screen display. The machine 1200 may additionally include a storage device (i.e., drive unit) 1216, a signal generation device 1218 (e.g., a speaker), a SAR control device 1219, a network interface device/transceiver 1220 coupled to antenna(s) 1230, and one or more sensors 1228, such as a global positioning system (GPS) sensor, a compass, an accelerometer, or other sensor. The machine 1200 may include an output controller 1234, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the disclosure may be carried out by a baseband processor. The baseband processor may be configured to generate corresponding baseband signals. The baseband processor may further include physical layer (PHY) and medium access control layer (MAC) circuitry, and may further interface with the hardware processor 1202 for generation and processing of the baseband signals and for controlling operations of the main memory 1204, the storage device 1216, and/or the SAR control device 1219. The baseband processor may be provided on a single radio card, a single chip, or an integrated circuit (IC).

The storage device 1216 may include a machine readable medium 1222 on which is stored one or more sets of data structures or instructions 1224 (e.g., software) embodying or utilized by any one or more of the techniques or functions described herein. The instructions 1224 may also reside, completely or at least partially, within the main memory 1204, within the static memory 1206, or within the hardware processor 1202 during execution thereof by the machine 1200. In an example, one or any combination of the hardware processor 1202, the main memory 1204, the static memory 1206, or the storage device 1216 may constitute machine-readable media.

The SAR control device 1219 may carry out or perform any of the operations and processes (e.g., methods 400, 500 and 600) described and shown above.

It is understood that the above are only a subset of what the SAR control device 1219 may be configured to perform and that other functions included throughout this disclosure may also be performed by the SAR control device 1219.

While the machine-readable medium 1222 is illustrated as a single medium, the term "machine-readable medium" may include a single medium or multiple media (e.g., a centralized or distributed database, and/or associated caches and servers) configured to store the one or more instructions 1224.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 1200 and that cause the machine 1200 to perform any one or more of the techniques of the disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 1224 may further be transmitted or received over a communications network 1226 using a transmission medium via the network interface device/transceiver 1220 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 1220 may include one or more physical jacks (e.g., Ethernet, coaxial, or phone jacks) or one or more antennas to connect to the communications network 1226. In an example, the network interface device/transceiver 1220 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 1200 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multi-standard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

Although certain embodiments have been illustrated and described herein for purposes of description, a wide variety of alternate and/or equivalent embodiments or implementations calculated to achieve the same purposes may be substituted for the embodiments shown and described without departing from the scope of the disclosure. This application is intended to cover any adaptations or variations of the embodiments discussed herein provided that such adaptations or variations fall within the scope of the appended claims. Therefore, it is manifestly intended that embodiments described herein be limited only by the appended claims.

## Claims

1. An apparatus (1100, 1219), comprising:
a detector; and
processor circuitry (1106) coupled with the detector,
wherein the detector is configured to:
based on Wireless Fidelity, Wi-Fi, sensing, detect (510) one or more objects within a coverage of a Wi-Fi device,
detect, based on a coarse sensing procedure, movement of at least one of the one or more objects,
and if movement is detected, detect, based on a fine sensing procedure, if the at least one detected object includes an animate object (203); and
wherein the processor circuitry (1106) is configured to:
estimate (520) a distance between the Wi-Fi device and the object (203) and/or a location of the object (203); and
adapt (530), based on the distance and/or the location, a communication parameter of the Wi-Fi device to reduce RF energy exposure on the object (203).

2. The apparatus (1100, 1219) of claim 1,
wherein the detector is configured to detect the objects based on consecutive sensing results, variation in a wireless channel of the Wi-Fi device, and/or Doppler analysis.

3. The apparatus (1100, 1219) of any one of claims 1 or 2,
wherein the detector is further configured to detect the objects periodically.

4. The apparatus (1100, 1219) of any one of claims 1 to 3, further comprising:
a memory (1108);
wherein the detector is configured to obtain an environment map comprising the objects, and wherein the memory (1108) is to store the environment map.

5. The apparatus (1100, 1219) of any one of claims 1 to 4,
wherein the communication parameter is to indicate a transmitting power of the Wi-Fi device, and
wherein the processor circuitry (1106) is further configured to decrease the transmitting power of the Wi-Fi device to reduce the RF energy exposure on the object.

6. The apparatus (1100, 1219) of any one of claims 1 to 5,
wherein the communication parameter is to indicate an antenna setting of the Wi-Fi device, and
wherein the processor circuitry (1106) is further configured to change the antenna setting of the Wi-Fi device to reduce the RF energy exposure on the object.

7. The apparatus (1100, 1219) of any one of claims 1 to 6,
wherein the processor circuitry (1106) is further configured to estimate the location of the object by comparing consecutive sensing results of the object.

8. The apparatus (1100, 1219) of any one of claims 1 to 7,
wherein the processor circuitry (1106) is further configured to:
determine that the distance is less than a threshold; and
adapt the communication parameter of the Wi-Fi device to reduce RF energy exposure on the object.

9. The apparatus (1100, 1219) of any one of claims 1 to 8,
wherein the processor circuitry (1106) is further configured to:
determine that the object is located at a line-of-sight (LoS) path between the Wi-Fi device and another Wi-Fi device; and
adapt the communication parameter of the Wi-Fi device to reduce RF energy exposure on the object.

## Patentansprüche

1. Einrichtung (1100, 1219), die Folgendes umfasst:
einen Detektor; und
eine Prozessorschaltungsanordnung (1106), die mit dem Detektor gekoppelt ist,
wobei der Detektor dazu ausgelegt ist:
basierend auf drahtlosem Wireless-Fidelity-Erfassen, Wi-Fi-Erfassen, eines oder mehrerer Objekte innerhalb einer Abdeckung einer Wi-Fi-Vorrichtung zu detektieren (510), basierend auf einem Groberfassungsvorgang, eine Bewegung von mindestens einem des einen oder der mehreren Objekte zu detektieren, und falls eine Bewegung detektiert wird, basierend auf einem Feinerfassungsvorgang zu detektieren, falls das mindestens eine detektierte Objekt ein animiertes Objekt (203) beinhaltet; und
wobei die Prozessorschaltungsanordnung (1106) dazu ausgelegt ist:
einen Abstand zwischen der Wi-Fi-Vorrichtung und dem Objekt (203) und/oder einem Ort des Objekts (203) zu schätzen (520); und
basierend auf dem Abstand und/oder dem Ort, einen Kommunikationsparameter der Wi-Fi-Vorrichtung anzupassen (530), um eine HF-Energiebelastung an dem Objekt zu reduzieren (203).

2. Einrichtung (1100, 1219) nach Anspruch 1,
wobei der Detektor dazu ausgelegt ist, die Objekte basierend auf aufeinanderfolgenden Erfassungsergebnissen, Variation in einem Drahtloskanal der Wi-Fi-Vorrichtung und/oder einer Doppler-Analyse zu detektieren.

3. Einrichtung (1100, 1219) nach einem der Ansprüche 1 oder 2,
wobei der Detektor ferner dazu ausgelegt ist, die Objekte periodisch zu detektieren.

4. Einrichtung (1100, 1219) nach einem der Ansprüche 1 bis 3, die ferner Folgendes umfasst:
einen Speicher (1108);
wobei der Detektor dazu ausgelegt ist, eine Umgebungskarte zu erhalten, die die Objekte umfasst, und wobei der Speicher (1108) die Umgebungskarte speichern soll.

5. Einrichtung (1100, 1219) nach einem der Ansprüche 1 bis 4,
wobei der Kommunikationsparameter eine Sendeleistung der Wi-Fi-Vorrichtung angeben soll, und
wobei die Prozessorschaltungsanordnung (1106) ferner dazu ausgelegt ist, die Sendeleistung der Wi-Fi-Vorrichtung zu verringern, um die HF-Energiebelastung an dem Objekt zu reduzieren.

6. Einrichtung (1100, 1219) nach einem der Ansprüche 1 bis 5,
wobei der Kommunikationsparameter eine Antenneneinstellung der Wi-Fi-Vorrichtung angeben soll, und
wobei die Prozessorschaltungsanordnung (1106) ferner dazu ausgelegt ist, die Antenneneinstellung der Wi-Fi-Vorrichtung zu ändern, um die HF-Energiebelastung an dem Objekt zu reduzieren.

7. Einrichtung (1100, 1219) nach einem der Ansprüche 1 bis 6,
wobei die Prozessorschaltungsanordnung (1106) ferner dazu ausgelegt ist, den Ort des Objekts durch Vergleichen aufeinanderfolgender Erfassungsergebnisse des Objekts zu schätzen.

8. Einrichtung (1100, 1219) nach einem der Ansprüche 1 bis 7,
wobei die Prozessorschaltungsanordnung (1106) ferner dazu ausgelegt ist:
zu bestimmen, dass der Abstand kleiner als ein Schwellenwert ist; und
den Kommunikationsparameter der Wi-Fi-Vorrichtung anzupassen, um die HF-Energiebelastung an dem Objekt zu reduzieren.

9. Einrichtung (1100, 1219) nach einem der Ansprüche 1 bis 8,
wobei die Prozessorschaltungsanordnung (1106) ferner dazu ausgelegt ist:
zu bestimmen, dass sich das Objekt an einem Sichtlinienpfad (LoS) zwischen der Wi-Fi-Vorrichtung und einer anderen Wi-Fi-Vorrichtung befindet; und
den Kommunikationsparameter der Wi-Fi-Vorrichtung anzupassen, um die HF-Energiebelastung an dem Objekt zu reduzieren.

## Revendications

1. Appareil (1100, 1219), comportant :
un détecteur ; et
une circuiterie (1106) de processeur couplée au détecteur,
le détecteur étant configuré pour :
sur la base d'une détection par Wi-Fi, détecter (510) un ou plusieurs objets à l'intérieur d'une zone de couverture d'un dispositif Wi-Fi, détecter, sur la base d'une procédure de détection grossière, un mouvement de l'objet ou d'un des objets, et si un mouvement est détecté, détecter, sur la base d'une procédure de détection fine, si l'objet ou les objets détectés comprennent un objet animé (203) ; et
la circuiterie (1106) de processeur étant configurée pour :
estimer (520) une distance entre le dispositif Wi-Fi et l'objet (203) et/ou un emplacement de l'objet (203) ; et
adapter (530), en fonction de la distance et/ou de l'emplacement, un paramètre de communication du dispositif Wi-Fi pour réduire une exposition à l'énergie RF sur l'objet (203).

2. Appareil (1100, 1219) selon la revendication 1,
le détecteur étant configuré pour détecter les objets d'après des résultats de détection consécutifs, une variation dans un canal sans fil du dispositif Wi-Fi, et/ou une analyse Doppler.

3. Appareil (1100, 1219) selon l'une quelconque des revendications 1 ou 2,
le détecteur étant en outre configuré pour détecter les objets périodiquement.

4. Appareil (1100, 1219) selon l'une quelconque des revendications 1 à 3, comportant en outre :
une mémoire (1108) ;
le détecteur étant configuré pour obtenir une carte d'environnement comportant les objets, et la mémoire (1108) servant à conserver la carte d'environnement.

5. Appareil (1100, 1219) selon l'une quelconque des revendications 1 à 4,
le paramètre de communication servant à indiquer une puissance d'émission du dispositif Wi-Fi, et
la circuiterie (1106) de processeur étant en outre configurée pour diminuer la puissance d'émission du dispositif Wi-Fi afin de réduire l'exposition à l'énergie RF sur l'objet.

6. Appareil (1100, 1219) selon l'une quelconque des revendications 1 à 5,
le paramètre de communication servant à indiquer un réglage d'antenne du dispositif Wi-Fi, et
la circuiterie (1106) de processeur étant en outre configurée pour modifier le réglage d'antenne du dispositif Wi-Fi afin de réduire l'exposition à l'énergie RF sur l'objet.

7. Appareil (1100, 1219) selon l'une quelconque des revendications 1 à 6,
la circuiterie (1106) de processeur étant en outre configurée pour estimer l'emplacement de l'objet en comparant des résultats de détection consécutifs de l'objet.

8. Appareil (1100, 1219) selon l'une quelconque des revendications 1 à 7,
la circuiterie (1106) de processeur étant en outre configurée pour :
déterminer que la distance est inférieure à un seuil ; et
adapter le paramètre de communication du dispositif Wi-Fi pour réduire une exposition à l'énergie RF sur l'objet.

9. Appareil (1100, 1219) selon l'une quelconque des revendications 1 à 8,
la circuiterie (1106) de processeur étant en outre configurée pour :
déterminer que l'objet est situé sur un trajet en ligne de visée (LoS) entre le dispositif Wi-Fi et un autre dispositif Wi-Fi ; et
adapter le paramètre de communication du dispositif Wi-Fi pour réduire une exposition à l'énergie RF sur l'objet.
